# EUROPEAN PATENT APPLICATION

(11) **EP 1 053 892 A1**
(43) Date of publication of application: **22.11.2000**
(21) Application number: 99830310.1
(22) Date of filing: 20.05.1999
(51) Int. Cl.: B60B 3/00, B60B 33/00

(54) **Wheel with a brake for trolleys and the like**

(71) Applicant: Derby Ruote S.r.L., 20090 Assago (Milano) (IT)
(72) Inventor: Torti, Angelo, 20090 Assago (Milano) (IT)
(74) Representative: Lecce, Giovanni

(57) **Abstract**

A wheel (10) with a brake for trolleys and the like comprises a supporting frame or fork constituted by a base plate-like body (12) and a couple of opposite and parallel branches (14), a plate (16) coupled to said fork and bearing in the middle an integral threaded column (24), a brake (18) constituted by a plurality of arms (28, 30, 32) articulated with one another and bearing an adjustable ferrule (20, suitable to strike the rolling surface (22) of the wheel; said brake (18) is connected to column (24) through means (36).

## Description

The present invention relates to a wheel with a brake for trolleys and the like.

More particularly, the present invention relates to a wheel especially suitable to be applied to industrial trolleys, provided with a braking device which allows its quick and safe stabilisation.

Besides equipping the aforesaid trolleys, generally utilised for the handling and transportation of artefacts and semi-finished products in the inside of production factories, the wheel with a brake of the present invention may be advantageously applied to movable structures of various kind, such as for instance shelves, window-cleaning movable scaffoldings, equipment utilised in the agricultural field, in the building sector, as well as to furniture components.

As is known, such structures, and especially industrial trolleys, are provided with wheels for their handling, which may be carried on by hand or with the help of motor-driven mechanical means.

Said wheels are generally constituted by a rim obtained from various materials, to which a suitably shaped annular body is associated that defines the rolling surface of the wheels; said body is caused to be integral with the rim during the subsequent forming steps that provide the wheel as a whole. To be applied to the trolleys or other apparatuses mentioned above, the so obtained wheels must be provided with a supporting frame, generally from metal, substantially fork-shaped, whose parallel branches couple with the hub by means of a transversal pin. Said supporting frame is rotably connected to a metal plate that forms the bearing base for the connection to the trolley or the like by means of conventional bolts; from said plate there centrally protrudes, in the direction of the fork branches, a threaded column suitable to fit into a hole obtained along the base of said fork. A nut is then screwed on the column to tie to one another the plate and the fork.

A hand-activated braking unit must be applied to the supporting frame, allowing to lock the rotation of the wheel, and therefore the trolley. The braking unit or brake is generally constituted by a leverage bearing and adjustable ferrule that strikes the rolling surface of the wheel.

The known brakes applied to the concerned wheels have some severe drawbacks, ensuing mainly from the fact that their connection with the supporting frame or fork is laborious; besides, the means utilised to realise said connection are subject to strong stresses which may cause their weakening and sometimes their breaking. In fact, to tie the brake to the fork a pin is conventionally utilised that is inserted into special through-holes obtained on said fork and on part of the leverage forming the brake; therefore, during the assembly, the different holes must be aligned in order to introduce therein said pin which must afterwards be locked in the seat by riveting operations or the like in correspondence of the opposite heads. These interventions to be performed by hand are generally laborious, and require much longer production times and therefore higher costs.

Besides, this type of coupling between the fork and the brake through a pin requires the preparation on said fork of a calibrated hole along each of the branches and in a precise position; said holes cannot be realised on the formation of the supporting frame or fork, as they would not be precise. In fact, if the fork is obtained by smelting separate parts, its opposite branches must afterwards be tied by welding to the base plate, and this operation cannot be realised with minimum tolerances; the holes possibly already obtained along said branches might turn out to be misaligned after the welding and prevent the correct insertion of the pin that connects the brake to the fork. Also if the fork is realised by moulding instead of smelting, the holes should be obtained afterwards by means of separate operations; actually, if they should be obtained on the moulding, they would ovalise and the pin would not therefore find a precise seat for its insertion. A further relevant drawback which is found in the wheels with a brake of the known art ensues directly from the utilisation of said pin as a connection means between said brake and the supporting frame or fork.

In fact, the pin is subject to strains and torsions during the activation of the brake and for all the time it exercises the braking action on the wheel; these stresses tend to weaken the pin which in some cases is subject to breaking, with all of the associated risks due to the lack of stabilisation of the trolley. Object of the present invention is to obviate the aforesaid risks. More particularly, object of the present invention is to realise a wheel with a brake for trolleys and the like, wherein said brake may be connected in an easy and quick manner to the supporting frame or fork.

A further object of the invention is to realise a wheel as defined above, such as not to require to perform operations on the fork to obtain, for instance, calibrated holes in order to tie the brake. A not least object of the invention is to provide a wheel wherein the means that connect the brake to the supporting frame or fork are not subject to stresses that might jeopardise the effectiveness of said brake.

A last object of the invention is to provide users with a wheel with a brake for trolleys and the like suitable to ensure a high level of resistance and reliability in the time, and such also as to be easily and economically realised.

These and still other objects are achieved by the wheel with a brake for trolleys and the like of the present invention, which comprises a supporting frame or fork constituted by a base plate-like body and a couple of opposite and parallel branches, a plate coupled to said fork and bearing in the middle an integral threaded column, a brake constituted by a plurality of arms articulated with each other and bearing an adjustable ferrule suitable to strike the rolling surface of the wheel, characterised in that said brake is caused to be integral with the columns through connecting means.

The constructive and functional characteristics of the wheel with a brake for trolleys and the like of the present invention shall be better understood thanks to the following description, wherein reference is made to the attached drawings which represent a preferred non limiting embodiment, and wherein:
Figure 1 represents schematically a partly sectioned side view of the wheel of the present invention, with the brake in resting position;
Figure 2 represents schematically a partly sectioned side view of the wheel of the present invention, with the brake in working position;
Figure 3 represents schematically a partly sectioned side view of the same wheel according to an execution variant, with the brake placed, by way of example, in working position.

With reference to the above figures, the wheel with a brake for trolleys and the like of the present invention, indicated as a whole by 10, basically comprises a supporting frame or fork constituted by a base plate-like body 12 and a couple of opposite and parallel branches 14, one only of which is represented, a plate 16 coupled to said fork and a braking unit or brake 18, bearing a ferrule 20 suitable to strike the rolling surface of the wheel, indicated by 22. The latter, in the schematic representation of the figures, is partly defined as to the profile by a plurality of circle arcs, to stress that the wheel may have a variable diameter, comprised by way of example between 100 and 400 mm, always by adopting said brake 18. Plate 16, which constitutes the bearing and tying base for the trolley or other apparatuses is provided with conventional through-openings (not represented) for the insertion of the bolt stem or like means, and has in a preferably central position, an integral pin or column 24 that protrudes from the inner front in the direction of branches 14 of the supporting frame or fork; on the base body 12 of the latter a complementary through-hole is obtained through which the column is caused to pass, said column being provided with a threading 26 extended at least in part along the free end. The brake, indicated as a whole by 18, and substantially of a known type, is formed by a leveration which comprises a couple of arms 28, 30, articulated with each other, the first of which constitutes the manoeuvre or activation unit; the second arm 30 bears the aforesaid female 20 having, by way of example, the form of a bolt with an adjustment nut 20', which allows its exposure to a variable extent with respect to the rolling surface 22 of the wheel.

Brake 18 comprises a further shaped arm 32, to which the two arms 28, 30 are articulated, that develops along a plane substantially parallel with respect to the inner front of the base plate-like body of fork 12.

According to the invention, said shaped arm 32 of brake 18, is provided in its central-front part, with a through-opening or hole 34, for instance having a circular form and with a diameter markedly greater than that of column 24, suitable to house at least a part of the free end of said column bearing threading 26. The longitudinal extent of said column 24, referred to its part that protrudes from the inner front of the base plate-like body 12, is such as to allow the screwing of a nut 36, that superposes to said body, to arm 32 of brake 18 and a metal ring 38 which circumscribe a bearing 40 of a conic type or a conventional ball type. In the embodiment of the figures, nut 36 is provided with flanges 36' in the upper part and has, on the opposite front facing the base plate-like body 12, an integral collar 42; the latter has an external diameter slightly smaller than opening 34 obtained on arm 32 of brake 18, constituting a guide and centring element at the time when said nut is screwed on the threaded part of column 24. Nut 36 constitutes therefore the only connection means between brake 18, the plate-like body 12 of the supporting frame and plate 16. To prevent the accidental loosening of nut 36, in the upper part of threading 26 of column 24 a transversally extended through-hole 44 is advantageously provided, suitable for the insertion of a peg, a split pin or the like; after the screwing of nut 36, said peg or split pin is forced into hole 44 which is comprised between two flanges 36' of said nut. Said flanges, equidistant from each other, are obtained in such a number as to allow a calibrated tightening of nut 36, i.e. such as to expose hole 44 at prefixed intervals.

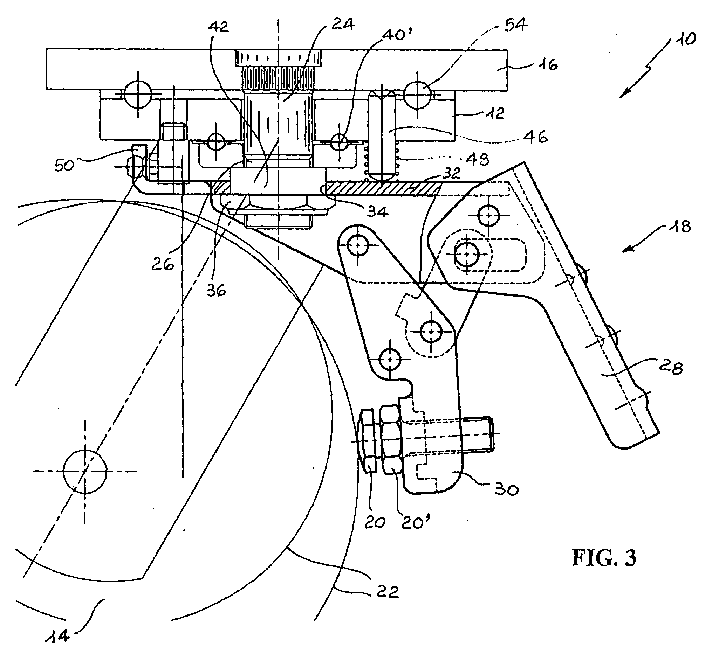

Figure 3 illustrates by way of example an execution variant of the wheel with a brake of the present invention.

According to such embodiment which is however identical to the preceding one with respect to the locking of brake 18 and the plate-like element to plate 16 by one only nut 36, a peg 46 is located in said body 12, wherefrom it protrudes in the direction of brake 18; in particular, peg 46 abuts in a hole obtained in the plate-like body 12, and extends outside until it brushes with the lower part of arm 32 of brake 18.

On the part of said peg that protrudes from body 12, a spring is fitted on that systematically strikes the lower face of arm 32.

Peg 46, of a suitable length, constitutes a striker for brake 18, starting from arm 32, at the time of its handling, preventing an excessive tilting and lowering in the direction of body 12; the adequate clearance that must exist between said components is ensured by spring 48, whose compression possibility is limited. On the same Figure 3, the locking nut 36 is, by way of example, of a conventional type, i.e. devoid of flanges, and between body 12 and arm 32 a ball ring 40' is interposed having the function of a bearing.

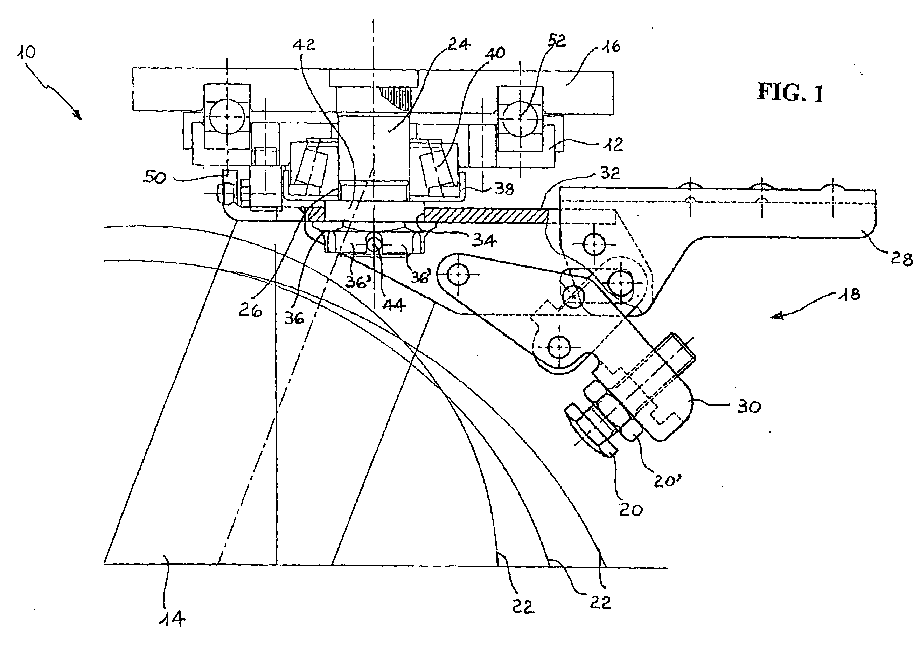

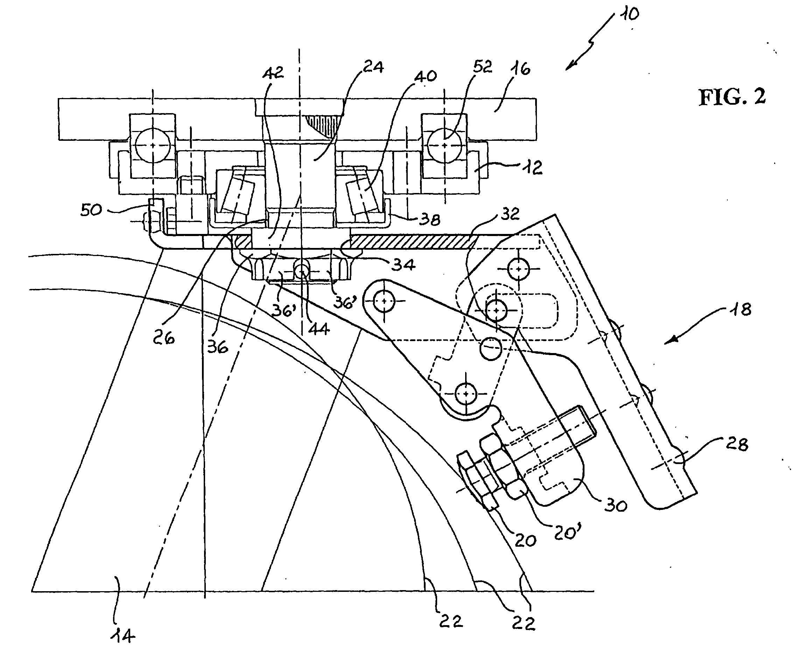

In both embodiments, arm 32 of brake 18 is bent downwards in one or more points, to form as many edges 50' that brush with body 12, and between the latter and plate 16, conventional means are located that ease the rotation of the fork bearing brake 18 with respect to said plate. Said means are advantageously constituted by a ball bearing 52, as schematised on Figures 1 and 2, or by individual balls 54 located in an annular seat, as indicated on Figure 3.

As can be inferred from the above, the advantages provided by the invention are evident.

In the wheel for trolleys and the like of the present invention, the application of brake 18 is obtained in an easy and quick manner, utilising the same nut 36 that locks to plate 16 the supporting frame or fork of said brake; the latter, even though it is repeatedly and strongly stressed, does not present points of failure nor is subject to torsions in correspondence of the zone of connection to said fork. Besides, particularly advantageous is the possibility of excluding mechanical drilling operations or the like on the fork to create seats for units of connection to brake 18. The invention, as described hereinabove and claimed hereafter, has however been proposed by way of non critical example only, meaning that the same may be subjected to many modifications and variants, all of which falling anyhow within the inventive concept scope.

For instance, nut 36 may be of any type and provided with a possible counter-nut; besides, brake 18 as a whole may be tied to column 24 by any suitable means, for instance by riveting.

## Claims

1. A wheel (10) with a brake for trolleys and the like, comprising a supporting frame or fork constituted by a base plate-like body (12) and a couple of opposite and parallel branches (14), a plate (16) coupled to said fork and bearing in the middle an integral threaded column (24), a brake (18) constituted by a plurality of arms (28, 30, 32) articulated with one another and bearing an adjustable ferrule (20), suitable to strike the rolling surface (22) of the wheel, characterised in that said brake (18) is connected to column (24) through means (36).

2. The wheel with a brake according to claim 1, characterised in that said means (36) are constituted by a flanged nut.

3. The wheel with a brake according to claim 1, characterised in that said means (36) are constituted by a nut and the associated counter-nut or a self-locking nut.

4. The wheel with a brake according to claim 1, characterised in that said means (36) are constituted by a riveting.

5. The wheel with a brake according to claim 1, characterised in that column (24) protrudes from plate (16) in the direction of the plate-like body (12) of said supporting frame, passes through said body provided with a central hole, and extends in a through-opening (34) of one of the arms of brake (18) wherefrom it protrudes.

6. The wheel with a brake according to the preceding claims, characterised in that the through-opening (34) is obtained on brake (18) in correspondence of arm (32) which develops along a plane substantially parallel with respect to the inner front of said base plate-like body (12), said opening (24) having a circular form with an upper diameter greater with respect to that of column (24).

7. The wheel with a brake according to the preceding claims, characterised in that nut (36) is provided with a plurality of flanges (36') equidistant from each other in the upper part, and has, on the opposite front facing the base plate-like body (12), an integral collar (42) having an external diameter slightly smaller than opening (34) obtained on arm (32) of brake (18).

8. The wheel with a brake according to the preceding claims, characterised in that column (24) has in the upper end part a transversally extended through-hole (44) suitable to house a peg or a split pin inserted between two adjoining flanges (36') of nut (36).

9. The wheel with a brake according to the preceding claims, characterised in that the plate-like body (12) is provided with a peg (46) protruding in the direction of brake (18), whereon a spring (48) is fitted that strikes the lower face of arm (32) of said brake.

10. The wheel with a brake according to one or more of the preceding claims, characterised in that said peg (46) extends in the direction of brake (18) until it brushes with the lower face of arm (32).

11. The wheel with a brake according to one or more of the preceding claims, characterised in that between said body (12) and arm (32) of brake (18) a ball or conic bearing (40) is interposed, circumscribed by a metal ring (38) or a ball ring (40').

12. The wheel with a brake according to one or more of the preceding claims, characterised in that between said body (12) and plate (16) there is provided a ball bearing (52) or a plurality of balls (54) located in an annular seat.

13. The wheel with a brake according to one or more of the preceding claims, characterised in that arm (32) of brake (18) is bent downwards in one or more points to form edges (50) facing body (12).
